# EUROPÄISCHE PATENTSCHRIFT

(11) **EP 0 694 741 B1**
(45) Veröffentlichungstag und Bekanntmachung des Hinweises auf die Patenterteilung: **22.09.1999**
(21) Anmeldenummer: 94111726.9
(22) Anmeldetag: 27.07.1994
(51) Int. Cl.: F24C 15/20, A21B 3/04

(54) **Backofen**
Cooking oven
Four de cuisson

(43) Veröffentlichungstag der Anmeldung: 31.01.1996
(73) Patentinhaber: BSH Bosch und Siemens Hausgeräte GmbH, 81669 München (DE)
(72) Erfinder: Henry, Karlheinz, Dipl.-Ing., D-83308 Trostberg (DE); Haberlander, Rainer, Dipl.-Ing. (FH), D-83329 Waging (DE); Kieslinger, Michael, Dipl.-Ing., D-85354 Freising (DE)

(56) Entgegenhaltungen:
- EP-A- 0 092 851
- DE-A- 2 600 081
- FR-A- 2 614 089
- GB-A- 2 177 897

## Beschreibung

Die Erfindung bezieht sich auf einen Backofen nach dem Oberbegriff des Patentanspruches 1.

Ein derartiger Backofen ist bekannt aus der Druckschrift FR-A-2 614 089 mit einer beheizbaren Ofenmuffel, die durch eine Ofentür verschließbar ist. Unterhalb der Ofenmuffel ist eine Kondensoreinrichtung für den in der Ofenmuffel beim Garbetrieb entstehenden Wrasen vorgesehen. Die Kondensoreinrichtung ist mit dem Innenraum der Ofenmuffel strömungsmäßig über eine Abluft- und eine Zuluftleitung verbunden. Im Bodenbereich des Backofens ist ein betriebsgemäß entfernbarer Kondensatbehälter gehaltert. Die Kondensoreinrichtung ist eingangsseitig über eine den nicht-kondensierten Wrasen führende Luftleitung und ausgangsseitig über eine in der Kondensoreinrichtung kondensierten Wrasen führende Luftleitung mit der Ofenmuffel strömungstechnisch verbunden. Dabei bilden die Kondensoreinrichtungen, die Luftleitungen und das Volumen der Ofenmuffel einen Luftumwälzkreislauf.

Weiter ist eine Kondensoreinrichtung für in einem Backofen entstehende Wrasen bekannt geworden (DE 37 00 567 A1), bei dem der rippenartige, Kühlwasser enthaltende oder durch einen Luftstrom durchströmbare Kondensor mit einem darunter angeordneten Kondensat-Sammelbehälter außerhalb der Ofenmuffel im oberen Bereich des Backofens entnehmbar in einem mit einer verschließbaren Entnahmeöffnung versehenen Gehäuse angeordnet ist. Hierbei ist die Kondensoreinrichtung über einen Wrasenabzugskanal mit der Ofenmuffel strömungsmäßig verbunden, so daß der bei Heizbetrieb des Backofens entstehende Wrasen nach oben durch den Wrasenabzugskanal zur Kondensoreinrichtung gelangt und dort die Kondensation des Wrasens erfolgt, wobei die Kondensatflüssigkeit über die Entnahmeöffnung entfernt werden kann. Bei einer anderen Vorrichtung zum geruchlosen Beseitigen von Wrasen (DE 31 51 303 A1) ist ein in Verbindung mit dem Wärmebehandlungsgerät stehendes Gehäuse vorgesehen, in welches ebenfalls durch freie Konvektion der Wrasen einströmt und dort mit Wasser besprüht wird, verbunden mit einer Kondensation der feuchten Wrasenbestandteile, wobei die Sprüheinrichtung an einen Frischwasserzulauf angeschlossen sein kann.

Der Erfindung liegt die Aufgabe zugrunde, die Einsatzmöglichkeiten eines Backofens nach dem Oberbegriff des Patentanspruches 1 zu erweitern.

Diese Aufgabe wird gemäß der Erfindung gelöst durch die im Kennzeichnungsteil des Patentanspruches 1 angegebenen Maßnahmen. Weitere Ausgestaltungen der Erfindung ergeben sich aus den übrigen Patentansprüchen.

Durch die Maßnahmen gemäß Patentanspruch 1 wird ermöglicht, alternativ zu einer Abführung des gereinigten und entfeuchteten Wrasens nach außen den in der Kondensoreinrichtung behandelten Wrasen im Inneren des Backofens zu belassen und durch ständige Zirkulation innerhalb des Luftumwälzkreislaufes zu reinigen, wobei die einmal erzeugte Prozeßwärme in der Ofenmuffel weitestgehend erhalten bleibt.

Durch die Maßnahme gemäß Patentanspruch 2 wird erreicht, daß sich die Kondensoreinrichtung an der kühlsten Stelle innerhalb des die Ofenmuffel aufnehmenden Ofengehäuses befindet, nämlich unterhalb der beheizten Ofenmuffel, so daß im Vergleich mit an anderer Stelle angeordneten Kondensoreinrichtungen ein geringeres Maß an Kühlleistung erbracht werden muß, um den feuchten und fetthaltigen Wrasen wirksam zu kondensieren und damit zu reinigen.

Gemäß den in Patentanspruch 6 angegebenen Maßnahmen wird in vorteilhafter Weise die Wirksamkeit der Kondensoreinrichtung wesentlich erhöht und infolge des geschlossenen Kühlsystems erst die Kondensoreinrichtung völlig wartungsfrei. Eine derartige hochwirksame Einrichtung ist mit besonderem Vorteil insb. bei solchen Backöfen anwendbar, bei denen eine besonders starke Wrasen- oder Dampfentwicklung während des Backofenbetriebes zu erwarten ist wie z.B. bei Backöfen, die eine Vorrichtung zum Dampfgaren besitzen. Hierbei ist es vorteilhaft, wenn die Kondensoreinrichtung und/oder der Kondensatbehälter sich unterhalb der Ofenmuffel befindet, so daß in einfacher Weise sich am Muffelboden absetzendes Kondensat ohne besondere Fördermaßnahmen nach unten abgeführt und entsorgt werden kann.

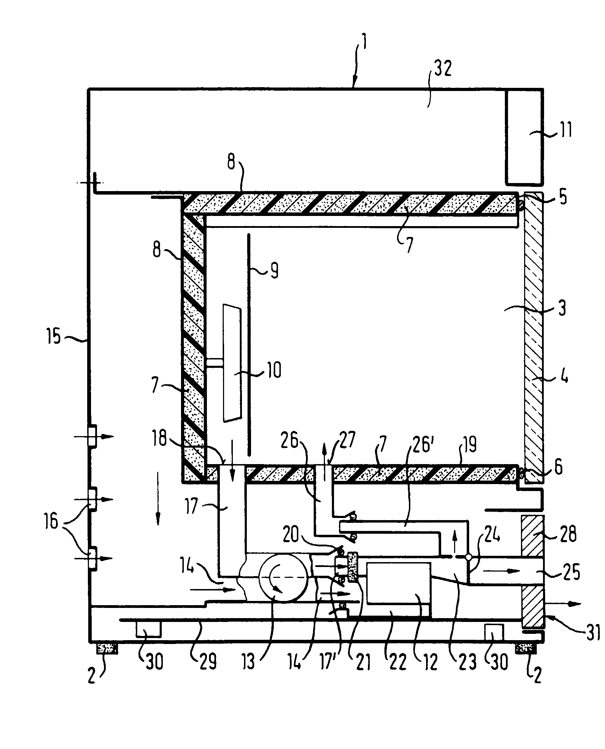

Die Erfindung ist anhand eines in der Zeichnung dargestellten Ausführungsbeispieles nachstehend erläutert.

Die Figur zeigt in schematischer Darstellung und in vertikalem Schnitt einen Backofen mit einem äußeren Ofengehäuse 1 mit Standfüßen 2, innerhalb welchem eine quaderförmige, einseitig offene Ofenmuffel 3 angeordnet ist. Die offene Seite der Ofenmuffel 3 ist verschließbar durch eine drehbare oder schubladenartig verschiebbare Ofentür 4, die sich in der Schließstellung an einer umlaufenden, am Ofenflansch 5 angeordneten Dichtung 6 abstützt. Die Ofenmuffel 3 ist umgeben mit einer Wärmedämmschicht 7 sowie mit zusätzlichen äußeren Wärmeschutzwänden 8, die insb. in bezug auf Wärmestrahlung eine zusätzliche thermische Isolierung der Ofenmuffel darstellen. Im Inneren der Ofenmuffel 3 befindet sich hinter einer Zwischenwand 9 ein Umluftgebläse 10, das durch einen außerhalb der Ofenmuffel angeordneten elektrischen Antriebsmotor angetrieben wird. Oberhalb der Ofentür 4 besitzt der Backofen eine nur schematisch angedeutete Schalterblende 11. Wie allgemein üblich, besitzt der Backofen innerhalb oder außerhalb der Ofenmuffel 4 nicht-dargestellte Heizkörper wie elektrische Strahlungsheizkörper, Dampferzeugungsvorrichtungen, Mikrowellengeneratoren oder dergleichen. Zur Steuerung und/oder Regelung derselben sind nicht dargestellte Einrichtungen vorgesehen, die sich beim Ausführungsbeispiel in dem Gehäuseraum 12 hinter der Schalterblende 11 befinden können.

In dem Gehäuseraum unterhalb der Ofenmuffel 3 befindet sich eine nur schematisch angedeutete Kondensoreinrichtung 12. Diese Kondensoreinrichtung 12 kann ähnlich ausgebildet sein wie diejenige, die in DE 37 00 567 A1 erläutert ist, wobei als Kühlmedium ein Wasservorrat verwendet wird oder aber die Kondensoreinrichtung 12 kann lufgekühlte Flächen oder Elemente enthalten mit oder ohne zusätzlichem Kühlmedium z.B. Wasser, wobei für die Frischluftzuführung ein Gebläse 13 vorgesehen ist, von dem aus über eine Frischluftleitung 14 der Kondensoreinrichtung 12 Kühlluft zugeführt wird, wobei hierzu in der Gehäuserückwand 15 entsprechende Öffnungen 16 für die Frischluftzuleitung vorgesehen sind. Schließlich kann die Kondensoreinrichtung als Kühlelement den Verdampfer eines, einen geschlossenen Kühlkreislauf mit Kältemittel enthaltenden Kühlaggregats aufweisen, wobei das Kühlaggregat aufgrund der relativ geringen erforderlichen Kühlleistung raumsparend ausgebildet sein kann und unmittelbarer Bestandteil der Kondensoreinrichtung 12 sein kann. Das Kühlaggregat kann als Kompressor-Aggregat oder als Absorber-Aggregat ausgebildet sein. Eingangsseitig ist die Kondensoreinrichtung 12 über eine Luftleitung 17 mit dem Innenraum der Ofenmuffel 3 verbunden, wobei diese Luftleitung 17 mit einer Öffnung 18 im Muffelboden 19 und in der ihn überziehenden Wärmedämmschicht 7 verbunden ist. Diese Öffnung 18 befindet sich beim Ausführungsbeispiel im rückwärtigen Abschnitt der Ofenmuffel 3 etwa in Höhe des Umluftgebläses 10. die Luftleitung 17 ist gehäusefest angeordnet und steht in Kupplungsverbindung mit einem Steckanschlußstutzen 17' mit Steckdichtung 20, wobei sich im Strömungsweg des Steckanschlußstutzens ein Fettfilter 21 befindet. Das Gebläse 13 ist z.B. als Doppelgebläse mit einem Antriebsmotor und mit zwei Gebläserädern ausgebildet und ist sowohl der Frischluftleitung 14 als auch der Luftleitung 17 zugeordnet und hat die Aufgabe, in Pfeilrichtung sowohl Frischluft anzusaugen und in Richtung der Kondensoreinrichtung 12 zu transportieren als auch aus dem Inneren der Ofenmuffel 3 bei Heizbetrieb dort entstehenden Wrasen ebenfalls in Pfeilrichtung anzusaugen und über die Luftleitung 17 durch das Fettfilter 21 hindurch zur Kondensoreinrichtung 12 zu transportieren. Hierzu besitzt die Kondensoreinrichtung 12 eingangsseitig entsprechende Lutteinlassöffnungen für den von der Ofenmuffel 3 her kommenden heißen und feuchten Wrasen einerseits und für die von außen her kommende Frischluft andererseits, die zu den in der Kondensoreinrichtung 12 enthaltenen Kühlelementen geleitet wird. Der über den Steckanschlußstutzen 17' in die Kondensoreinricchtung 12 eingeleitete Wrasen wird in dieser Einrichtung an den entsprechenden Kühlflächen kondensiert, wobei das Kondensat nach unten in einen unterhalb der Kondensoreinrichtung 12 angeordneten Kondensatbehälter 22 fließt und von dort entsorgt wird z.B. durch periodisches Klären des Kondensatbehälters oder aber durch direktes Ableiten der Kondensatflüssigkeit in eine Abwasserleitung z.B. eines Spülbeckens oder dergleichen. Eine Strömung des Wrasens durch die Luftleitung 17 hindurch zur Kondensoreinrichtung 12 kann zusätzlich zur Saugwirkung des Gebläses 13 oder alternativ auch durch die Druckwirkung des Umluftgebläses 10 erfolgen. Ausgangsseitig ist an die Kondensoreinrichtung 12 eine Zweiwege-Strömungsweiche 23 mit Stellklappe 24 angeschlossen, von der aus ein Luftaustrittskanal 25 zur Frontseite des Backofens hin ins Freie mündet (in der Zeichnung durch Stellklappe 24 verschlossen) und andererseits über eine Luftleitung 26 und einen zugeordneten Steckanschlußstützen 26' strömungsmäßig mit dem Inneren der Ofenmuffel 3 in Verbindung steht. Die Luftleitung 26 ist über eine Öffnung 27 im Muffelboden 19 und in der Wärmedämmschicht 7 an die Ofenmuffel 3 angeschlossen, so daß bei senkrechter Stellung der Stellklappe 24 eine Luftumwälzkreislauf dergestalt erhalten wird, daß der durch die Öffnung 18 hindurch aus der Ofenmuffel 3 abgesaugte feuchte Wrasen zur Kondensoreinrichtung 12 transportiert und dort gereinigt wird und danach wieder der Ofenmuffel 3 zugeführt wird. Auf diese Weise kann während eines Backofensbetriebs mit viel Wrasenanfall eine ständige reinigung des Wrasens ohne nennenswerte Wärmeabführung erfolgen. Beim Ausführungsbeispiel ist die Kondensoreinrichtung 12 mit dem Kondensatbehälter 22 als in das Backofengehäuse 1 einschiebbarer Modul ausgestaltet. Dieser Modul umfaßt, wie erwähnt, die Kondensoreinrichtung 12, zumindest die Kühlflächen derselben, den Kondensatbehälter 22, den Steckanschlußstutzen 17' mit Fettfilter 21, die Strömungsweiche 23 mit Steckanschlußstutzen 26' und Luftaustrittskanal 25, der sich in einer Blendenplatte 28 befindet. Als Basis für diesen Modul dient eine Grundplatte 29, die zusammen mit der Blendenplatte 28 in Pfeilrichtung aus dem Ofengehäuse 1 nach Art einer Schublade herausziehbar ist. Hierzu dienen Führungselemente 30 in Form von Laufrollen oder dergleichen. Hierbei lösen sich die Steckanschlußstutzen 17' und 26' von ihren gehäusefesten Luftleitungen 17 und 26; Umgekehrt treten die vorgenannten Teile beim Wiedereinschieben des Moduls in das Ofengehäuse 1 wieder in Steckkupplungsverbindung.

In der Zeichnung ist der vorgenannte Modul allgemein mit 31 bezeichnet. Mit dem Umklappen der Stellklappe 24 nach oben wird das vorbeschriebene System auf reinen Abluftbetrieb umgeschaltet, wobei die von der Kondensoreinrichtung 12 austretende gereinigte und gekühlte Abluft unmittelbar ins Freie abgeführt wird. Selbstverständlich sind Zwischenstellungen der Stellklappe 24 und eine entsprechende Kombination zwischen Umwälzbetrieb und Abluftbetrieb möglich. Bei Luftumwälzbetrieb bildet sich an der Öffnung 27 infolge des Druck- oder Saugbetriebs in der Luftleitung 17 ein Ansaugeffekt aus mit der Wirkung, daß der kondensierte und entfettete Wrasen über die Luftleitung 26 in das Innere der Ofenmuffel 3 zurückgeführt wird.

## Patentansprüche

1. Backofen mit einer durch eine Ofentür (4) verschließbaren, beheizbaren Ofenmuffel (3) sowie mit einer Kondensoreinrichtung (12) für den in der Ofenmuffel (3) bei Garbetrieb entstehenden Wrasen, welche Kondensoreinrichtung (12) mit dem Innenraum der Ofenmuffel (3) strömungsmäßig über Luftleitungen (17, 26, 26') verbunden ist und einen vorzugsweise enffernbaren Kondensatbehälter (22) aufweist, eingangsseitig über mindestens eine, den nicht-kondensierten Wrasen führende Luftleitung (17) und ausgangsseitig über mindestens eine, den kondensierten Wrasen führende Luftleitung (26) mit der Ofenmuffel (3) strömungsmäßig verbunden ist, derart, daß die Kondensoreinrichtung (12), die Luftleitungen und das Volumen der Ofenmuffel (3) einen Luftumwälzkreislauf bilden, **dadurch gekennzeichnet,** daß der Kondensoreinrichtung (12) ausgangsseitig eine steuerbare Strömungsweiche (23) nachgeschaltet ist, an die einerseits die zur Ofenmuffel (3) führende Luftleitung (26) und andererseits eine ins Freie führende Abluftleitung (25) angeschlossen ist.

2. Backofen nach Anspruch 1, **dadurch gekennzeichnet,** daß die Kondensoreinrichtung (12) unterhalb der Ofenmuffel (3) angeordnet ist und daß die Zuleitung des Wrasens in der Luftleitung (17) zur Kondensoreinrichtung (12) mittels eines Gebläses (13) erfolgt.

3. Backofen nach Anspruch 1 oder 2, **dadurch gekennzeichnet,** daß in der Zuleitung für den Wrasen vor der Kondensoreinrichtung (12) ein Fettfilter (21) angeordnet ist.

4. Backofen nach einem der vorhergehenden Ansprüche, **dadurch gekennzeichnet,** daß in die Kondensoreinrichtung (12) zusätzlich zu der wrasenführenden Zuleitung (17) eine Frischluftzuleitung (14) einmündet.

5. Backofen nach Anspruch 4, **dadurch gekennzeichnet,** daß sowohl in der wrasenführenden Zuleitung (17) als auch in der Frischluftzuleitung (14) ein vorzugsweise als Doppelgebläse ausgebildetes Gebläse (13) angeordnet ist.

6. Backofen nach einem der vorhergehenden Ansprüche, **dadurch gekennzeichnet,** daß die Kondensoreinrichtung (12) als Verdampfer eines, einen geschlossenen Kühlkreislauf mit Kältemittel enthaltenden Kühlaggregat ausgebildet ist.

7. Backofen nach einem der vorhergehenden Ansprüche, **dadurch gekennzeichnet,** daß die Kondensoreinrichtung (12) mit dem Kondensatbehälter (22) und gegebenenfalls mit dem Fettfilter (21) Bestandteil eines in das Backofengehäuse (1) einschiebbaren Moduls (31) ist.

8. Backofen nach Anspruch 7, **dadurch gekennzeichnet,** daß der Modul (31) mit der Kondensoreinrichtung (12) verbundene Steckanschlußstutzen (17', 26') aufweist, die mit den gehäusefesten Zuleitungen beim Verschieben des Moduls kuppelbar bzw. entkuppelbar sind.

9. Backofen nach Anspruch 8, **dadurch gekennzeichnet,** daß der Modul (31) die Abluftleitung (25) und die Strömungsweiche (23) trägt.

10. Backofen nach einem der vorhergehenden Ansprüche, **dadurch gekennzeichnet,** daß die Ofenmuffel (3) zusätzlich zu der sie umgebenden Wärmedämmschicht (7) durch Wärmeschutzwände (8) thermisch isoliert ist.

## Claims

1. Baking oven with a heatable oven muffle (3), which is closable by an oven door (4), as well as with a condenser equipment (12) for the vapours arising in the oven muffle (3) during cooking operation, which condenser equipment (12) is connected in terms of flow with the interior space of the oven muffle (3) by way of air ducts (17, 26, 26') and comprises a preferably removable condensate container (22), which is connected at the input side by way of at least one air duct (17), which carries the uncondensed vapours, and at the output side by way of at least one air duct (26), which carries the condensed vapours, in terms of flow with the oven muffle (3) in such a manner that the condenser equipment (12), the air ducts and the volume of the oven muffle (3) form an air circulation loop, characterised in that the condenser equipment (12) is connected at the output side with a controllable flow deflector switch (23), which is connected on the one hand to the air duct (26) leading to the oven muffle (3) and on the other hand to an exhaust air duct (25) leading into the open.

2. Baking oven according to claim 1, characterised in that the condenser equipment (12) is arranged underneath the oven muffle (3) and that the feeding of the vapour in the air duct (17) to the condenser equipment (12) takes place by means of a blower (13).

3. Baking oven according to claim 1 or 2, characterised in that a grease filter (21) is arranged in the feed duct for the vapours upstream of the condenser equipment (12).

4. Baking oven according to one of the preceding claims, characterised in that a fresh air duct (14) in addition to the vapour-carrying feed duct (17) opens into the condenser equipment (12).

5. Baking oven according to claim 4, characterised in that a blower (13), which is preferably constructed as double blower, is arranged in the vapour-carrying feed duct (17) as well as in the fresh air feed duct (14).

6. Baking oven according to one of the preceding claims, characterised in that the condenser equipment (12) is constructed as evaporator of a cooling unit containing a closed cooling loop with coolant.

7. Baking oven according to one of the preceding claims, characterised in that the condenser equipment (12) with the condensate container (22) and, in a given case, with the grease filter (21) is component of a module (31) insertable into the baking oven housing (1).

8. Baking oven according to claim 7, characterised in that the module (31) comprises plug connection members (17' 26'), which are couplable with or uncouplable from the feed ducts, which are fast with the housing, on displacement of the module.

9. Baking oven according to claim 8, characterised in that the module (31) carries the exhaust air duct (25) and the flow deflector switch (23).

10. Baking oven according to one of the preceding claims, characterised in that the oven muffle (3) is, in addition to the heat-insulating layer (7) surrounding it, insulated thermally by heat protection walls (8).

## Revendications

1. Four de cuisson avec une moufle de four (3) chauffable qui se ferme par une porte de four (4) ainsi qu'avec un dispositif de condensation (12) pour les vapeurs engendrées par le processus d'affinage dans la moufle de four (3), lequel dispositif de condensation (12) est relié, en rapport avec la technique des fluides, avec l'intérieur de la moufle de four (3) via des conduites d'air (17, 26, 26'), présente un récipient de condensat (22) de préférence amovible et est relié à la moufle de four (3), en rapport avec la technique des fluides, du côté entrée, via au moins une conduite d'air (17) qui amène les vapeurs non condensées, et du côté sortie, via au moins une conduite d'air (26) amenant les vapeurs condensées de sorte que le dispositif de condensation (12), les conduites d'air et le volume de la moufle de four (3) forment un circuit de circulation d'air, **caractérisé en ce que** le dispositif de condensation (12) est branché en aval, du côté sortie, à un dispositif de changement de courant (23) contrôlable auquel est raccordé d'un côté la conduite d'air (26) qui conduit à la moufle de four (3) et d'autre part une conduite d'évacuation de l'air (25) qui conduit l'air à l'extérieur.

2. Four de cuisson selon la revendication 1, **caractérisé en ce que** le dispositif de condensation (12) est disposé en-dessous de la moufle de four (3) et que l'amenée des vapeurs au dispositif de condensation (12) se fait dans la conduite d'air (17) au moyen d'une soufflerie (13).

3. Four de cuisson selon la revendication 1 ou 2, **caractérisé en ce qu**'un filtre à graisse (21) est disposé dans la conduite d'amenée pour les vapeurs avant le dispositif de condensation (12).

4. Four de cuisson selon l'une quelconque des revendications précédentes, **caractérisé en ce qu'**une conduite d'air frais (14) débouche dans le dispositif de condensation (12) en plus de la conduite d'amenée des vapeurs (17).

5. Four de cuisson selon la revendication 4, **caractérisé en ce qu'**aussi bien dans la conduite d'amenée des vapeurs (17) que dans la conduite d'amenée d'air frais (14) est disposée une soufflerie (13) formée de préférence comme une double soufflerie.

6. Four de cuisson selon l'une quelconque des revendications précédentes, **caractérisé en ce que** le dispositif de condensation (12) est formé comme un vaporisateur d'un agrégat de réfrigération contenant un circuit de refroidissement fermé avec frigorigène.

7. Four de cuisson selon l'une quelconque des revendications précédentes, **caractérisé en ce que** le dispositif de condensation (12) ainsi que le récipient de condensat (22) et le cas échéant le filtre à graisse (21) sont des composantes d'un module (31) enfichable dans le boîtier du four de cuisson (1).

8. Four de cuisson selon la revendication 7, **caractérisé en ce que** le module (31) présente des tubulures de connexion de prise embrochable (17', 26') reliées au dispositif de condensation (12), lesquelles tubulures peuvent être couplées resp. découplées avec des conduites fixées au boîtier lors du déplacement du module.

9. Four de cuisson selon la revendication 8, **caractérisé en ce que** le module (31) porte la conduite d'évacuation d'air (25) et le dispositif de changement de courant (23).

10. Four selon l'une quelconque des revendications précédentes, **caractérisé en ce que** la moufle de four (3) est isolée thermiquement par des parois calorifuges (8), en plus de la couche calorifuge (7) qui l'entoure.
